# EUROPÄISCHE PATENTANMELDUNG

(11) **EP 0 599 313 A2**
(43) Veröffentlichungstag der Anmeldung: **01.06.1994**
(21) Anmeldenummer: 93119021.9
(22) Anmeldetag: 25.11.1993
(51) Int. Cl.: H04N 1/21

(54) **Elektronische Präsentationseinrichtung**

(30) Priorität: 27.11.1992 DE 4239933
(71) Anmelder: Alcatel SEL Aktiengesellschaft, D-70435 Stuttgart (DE)
(72) Erfinder: Frohberg, Wolfgang, D-70439 Stuttgart (DE); König, Wolfgang, D-74360 Ilsfeld (DE); Schmietainski, Anke, D-71282 Hemmingen (DE); Weis, Bernd X., D-70825 Korntal (DE)
(74) Vertreter: Pohl, Herbert, Dipl.-Ing

(57) **Zusammenfassung**

Beschrieben wird eine elektronische Präsentationseinrichtung, die eine Darstellungsfläche (2) sowie eine Ausleseeinheit aufweist, durch die auf der Darstellungsfläche (2) graphisch dargestellte Informationen erfaßbar und in elektrische Signale umsetzbar sind. Erfindungsgemäß ist vorgesehen, daß die elektronische Präsentationseinrichtung (1a;1b;1c) eine Wiedergabeeinrichtung (10) aufweist, der ein Signal zugeführt ist, welches in codierter Form die auf der Darstellungsfläche (2) der elektronischen Präsentationseinrichtung (1a;1b;1c) wiederzugebende graphische Information enthält, daß die Wiedergabeeinrichtung (10) eine Decodiereinheit (11) aufweist, welche das die graphische Information repräsentierende Signal in Steuersignale umwandelt, daß diese Steuersignale einer Graphikeinheit (12) der Wiedergabeeinrichtung (10) zugeführt sind, durch die die reproduzierende graphische Information auf der Darstellungsfläche (2) der elektronischen Präsentationseinrichtung (1a;1b;1c) darstellbar ist.

## Beschreibung

Die Erfindung betrifft eine elektronische Präsentationseinrichtung, die eine Darstellungsfläche sowie eine Ausleseeinheit aufweist, durch die auf der Darstellungsfläche graphisch dargestellte Informationen erfaßbar und in elektrische Signale umsetzbar sind.

Eine derartige elektronische Präsentationseinrichtung ist aus der EP 0 164 084 B1 sowie aus der EP 0 164 085 B1 bekannt. In diesen Druckschriften ist eine als elektronische Präsentationseinrichtung einsetzbare elektronische Kopiertafel beschrieben, die eine Darstellungsfläche mit einem Schreibmedium aufweist, das sich zwischen einer Antriebsrolle und einer Stützrolle erstreckt und durch die Rotation der Antriebsrolle bewegbar ist. Um die auf dem Schreibmedium der elektronischen Kopiertafel enthaltene Bilddarstellung über einen externen Drucker wiedergeben zu können ist vorgesehen, daß das Schreibmedium durch die Antriebsrolle aus der Darstellungsfläche hinaus zu einer Lesezone transportiert wird, in der eine Lichtquelle, ein Lesesensor und eine mit dem Lesesensor Zusammenwirkende Aufzeichnungseinrichtung angebracht sind. Das Schreibmedium wird nun wie bei einem herkömmlichen Kopiergerät zeilenweise abgetastet und die auf dem Schreibmedium enthaltene Bilddarstellung wird in elektrische Signale umgesetzt. Diese Signale werden dann zum elektronischen Drucker geleitet, der die auf der Darstellungsfläche enthaltene Bilddarstellung auf einem Blatt Papier ausdruckt.

Es ist bei der bekannten elektronischen Kopiertafel in nachteiliger Art und Weise erforderlich, zur elektronischen Erfassung der auf der Darstellungsfläche enthaltenen Bilddarstellung diese von der Darstellungsfläche zu entfernen und in die Lesezone zu transportieren. Dies bedeutet aber, daß die Bilddarstellung während der Zeitdauer der elektronischen Bilderfassung für die Betrachter der elektronischen Kopiertafel nicht mehr sichtbar ist, so daß störende Unterbrechungen des Präsentationsvorganges auftreten. Es ist bei der bekannten elektronischen Kopiertafel also in nachteiliger Art und Weise nicht möglich, die auf der Darstellungsfläche enthaltene graphische Information bereits während des Schreib- oder Zeichenvorgangs zu erfassen. Dies beeinträchtigt nachteiligerweise die Funktionalität der bekannten elektronischen Kopiertafel.

Um die vom Benutzer der elektronischen Kopiertafel auf die Darstellungsfläche gezeichnete Bilddarstellung um graphische Elemente erweitern zu können, welche auf externen Dokumenten - wie z.B. Photographien oder Konstruktionsskizzen - enthalten sind, ist vorgesehen, daß das Schreibmedium aus einem undurchsichtigen Ausgangsblatt und einem abnehmbar auf dem Ausgangsblatt angebrachten transparenten Blatt besteht. Zur Integration der auf dem externen Dokument enthaltenen Graphik in die Bilddarstellung der Darstellungsfläche wird das transparente Blatt vom undurchsichtigen Aufnahmeblatt abgenommen. Das externe Dokument wird auf das undurchsichtige Aufnahmeblatt geklebt. Das transparente Blatt wird dann wieder auf dem Aufnahmeblatt fixiert.

Eine derartige Art und Weise der Integration einer externen Darstellung in die Darstellungsfläche ist in nachteiliger Art und Weise umständlich und zeitaufwendig. Außerdem besitzt sie den Nachteil, daß das Dokument genau in der Form, wie es dann in der auf der Darstellungsfläche enthaltenen Graphik erscheinen soll, vorliegen muß. Es ist somit mit der bekannten elektronischen Kopiertafel nicht möglich, das externe Dokument zu vergrößern oder zu verkleinern oder auf sonstige Art und Weise zu bearbeiten. Die nur manuell und äußerst umständlich und zeitaufwendig durchzuführende Integration extern erstellter Dokumente in die bereits auf der Darstellungsfläche der bekannten elektronischen Kopiertafel enthaltenen Graphik beeinträchtigt in nachteiliger Weise die Benutzerfreundlichkeit und den Einsatzbereich der elektronischen Kopiertafel und somit deren Funktionalität.

Zur Vermeidung dieser Nachteile stellt sich die Erfindung die Aufgabe, eine elektronische Präsentationseinrichtung der eingangs genannten Art derart weiterzuentwickeln, daß diese eine verbesserte Funktionalität aufweist.

Diese Aufgabe wird erfindungsgemäß dadurch gelöst, daß die elektronische Präsentationseinrichtung eine Wiedergabeeinrichtung zur Reproduktion einer extern erzeugten graphischen Information aufweist, der ein Signal zugeführt ist, welches in codierter Form eine auf der Darstellungsfläche der elektronischen Präsentationseinrichtung wiederzugebende graphische Information enthält, daß die Wiedergabeeinrichtung eine Decodiereinheit aufweist, welche das die graphische Information repräsentierende Signal in Steuersignale umwandelt, daß diese Steuersignale einer Graphikeinheit der Wiedergabeeinrichtung zugeführt sind, durch die die zu reproduzierende graphische Information auf der Darstellungsfläche der elektronischen Präsentationseinrichtung darstellbar ist.

Durch die erfindungsgemäßen Maßnahmen wird in besonders vorteilhafter Art und Weise eine Präsentationseinrichtung geschaffen, bei der besonders einfach von externen Quellen stammende graphische Information in die bereits auf der Darstellungsfläche enthaltene Darstellung aufgenommen werden kann. Die externe Graphik wird hierzu mittels einer geeigneten externen Vorrichtung - z.B. einem Scanner o.dgl. - abgetastet, ggf. entsprechend den individuellen Wünschen des Benutzers der erfindungsgemäßen Präsentationseinrichtung bearbeitet und in geeigneter Art und Weise codiert. Dieses codiert die graphische Information enthaltene Signal wird dann übertragen und an einem anderen Ort der erfindungsgemäßen Präsentationseinrichtung zugeführt und über die erfindungsgemäß vorgesehene Wiedergabeeinrichtung auf der Darstellungsfläche der elektronischen Präsentationseinrichtung dargestellt.

Von besonderem Vorteil ist es jedoch, wenn als o.g. externe Vorrichtung eine zweite erfindungsgemäße Präsentationseinrichtung eingesetzt wird. Eine derartige zwei erfindungsgemäße Präsentationseinrichtungen aufweisende Anordnung ermöglicht in besonders einfacher Art und Weise eine Konferenzschaltung, welche vorteilhafterweise eine interaktive Bearbeitung einer Graphik, die auf der Darstellungsfläche einer der beiden Präsentationseinrichtungen enthalten ist, von der anderen Präsentationseinrichtung aus. Hierzu ist in vorteilhafter Art und Weise vorgesehen, daß die auf der Darstellungsfläche der ersten erfindungsgemäßen Präsentationseinrichtung enthaltene Graphik ausgelesen und über ein Übertragungsnetzwerk zur Wiedergabeeinrichtung der zweiten erfindungsgemäßen Präsentationseinrichtung geleitet wird, welche dann diese Graphik auf der Darstellungsfläche der zweiten erfindungsgemäßen Präsentationseinrichtung reproduziert. Der Benutzer der zweiten erfindungsgemäßen Präsentationseinrichtung kann dann die übertragene Graphik in vorteilhafter Art und Weise beliebig ergänzen. Diese Ergänzung wird dann abgetastet und von der zweiten zur ersten erfindungsgemäßen Präsentationseinrichtung übertragen. Die erfindungsgemäß vorgesehene Wiedergabeeinrichtung der ersten erfindungsgemäßen Präsentationseinrichtung reproduziert dann die von der zweiten Präsentationseinrichtung stammende Graphikergänzung auf der Darstellungsfläche der ersten Präsentationseinrichtung, etc. Es ist also mittels der erfindungsgemäßen Präsentationseinrichtungen in besonders einfacher Art und Weise ein interaktiver Dialog zwischen zwei oder mehreren sich an verschiedenen Orten befindlichen Präsentationseinrichtungen möglich. Die erfindungsgemäß vorgesehenen Maßnahmen bewirken somit eine drastische Steigerung der Funktionalität bei elektronischen Präsentationseinrichtungen, da es bei diesen nicht nur besonders einfach möglich ist, von externen Quellen stammenden Graphiken in die Darstellungsfläche der erfindungsgemäßen Präsentationseinrichtung zu integrieren. Vielmehr wird ein ein interaktives Arbeiten ermöglichender Dialog zwischen zwei erfindungsgemäß ausgerüsteten Präsentationseinrichtungen ermöglicht.

Eine vorteilhafte Weiterbildung der Erfindung sieht vor, daß als Wiedergabeeinrichtung eine an sich bekannte Ploteinrichtung verwendet wird. Diese Maßnahme besitzt den Vorteil, daß in besonders kostengünstiger Art und Weise eine Integration von externen Graphiken in die Darstellungsfläche ermöglicht wird.

Eine weitere vorteilhafte Weiterbildung der Erfindung sieht vor, daß als Wiedergabeeinrichtung eine von einer geeigneten Vorrichtung angesteuerte Flüssigkristall-Anzeigeneinrichtung oder eine auf Magnetfelder regierende Darstellungsfläche verwendet wird. Diese unterschiedlichen Varianten besitzen den Vorteil, daß es damit besonders einfach möglich ist, die erfindungsgemäße elektronische Präsentationseinrichtung in besonders vorteilhafter Art und Weise unterschiedlichsten Anforderungsprofilen an die erfindungsgemäß vorgesehene Wiedergabeeinrichtung anzupassen.

Eine alternative Lösung der o.g. Aufgabe sieht vor, daß die Ausleseeinheit eine hinter der Darstellungsfläche angeordnete Abtastfläche aufweist, durch die eine Bewegung eines Schreibgeräts auf der Darstellungsfläche registrierbar ist, und daß die Abtastfläche ein die momentane Position des Schreibgeräts auf der Darstellungsfläche charakterisierendes Positionssignal erzeugt, und daß dieses Positionssignal einer Auswerte-/Codiereinheit der Ausleseeinheit zugeführt ist, die aus dem Positionssignal ein die zu übertragene graphische Information repräsentierendes Signal erzeugt.

Die erfindungsgemäßen Maßnahmen erlauben es in besonders vorteilhafter Art und Weise, die Funktionalität der bekannten elektronischen Präsentationseinrichtungen dadurch zu steigern, daß es in vorteilhafter Art und Weise möglich wird, simultan zur Entstehung der Graphik auf der Darstellungsfläche der erfindungsgemäßen elektronischen Präsentationseinrichtung diese auszulesen und in elektronische Signale umzusetzen. Die erfindungsgemäß mit einer die Bewegung des Schreibgeräts auf der Darstellungsfläche registrierenden Abtastfläche ausgestattete Ausleseeinheit bewirkt in vorteilhafter Art und Weise, daß man nun nicht mehr - wie bei den eingangs genannten elektronischen Kopiertafeln - gezwungen ist, zum Auslesen einer auf der Darstellungsfläche enthaltenen Graphik den Präsentationsvorgang zu unterbrechen. Die während des Schreib- oder Zeichenvorgangs auf der Darstellungsfläche stattfindende elektronische Erfassung der Schreib- oder Zeichenbewegung bewirkt also in vorteilhafter Art und Weise eine drastische Erhöhung der Funktionalität derartiger Präsentationseinrichtungen.

Eine vorteilhafte Weiterbildung der Erfindung sieht vor, daß als Abtastfläche eine Magnetmatrix verwendet wird, die eine induktive Erfassung der Schreibbewegung des Schreibgeräts auf der Darstellungsfläche ermöglicht. Diese Maßnahme besitzt den Vorteil, daß die elektronische Erfassung der Schreibbewegung auf der Darstellungsfläche besonders einfach möglich ist.

Eine weitere vorteilhafte Weiterbildung der Erfindung sieht vor, daß die Bewegung des Schreibgeräts auf der Darstellungsfläche mechanisch über dessen Einwirkung auf eine Widerstandsfolie registriert wird. Diese Maßnahme besitzt den Vorteil, daß der Benutzer der erfindungsgemäßen elektronischen Präsentationseinrichtung herkömmliche Schreibgeräte verwenden kann.

Eine weitere vorteilhafte Weiterbildung der Erfindung sieht vor, daß nicht nur die Bewegung des Schreibgeräts auf der Darstellungsfläche, sondern auch die Farbe des aktuell verwendeten Schreibgeräts registriert wird. Diese erfindungsgemäß vorgesehene Maßnahme erweitert in besonders vorteilhafter Art und Weise den Einsatzbereich der erfindungsgemäßen Präsentationseinrichtung.

Weitere vorteilhafte Weiterbildungen der Erfindung ergeben sich aus den Unteransprüchen.

Weitere Einzelheiten der Erfindung sind dem Ausführungsbeispiel zu entnehmen, welches im folgenden anhand der Figuren beschrieben wird.

Es zeigen:
- Figur 1: ein Ausführungsbeispiel;
- Figur 2: einen Querschnitt durch das Ausführungsbeispiel entlang der Linie II-II der Fig. 1.

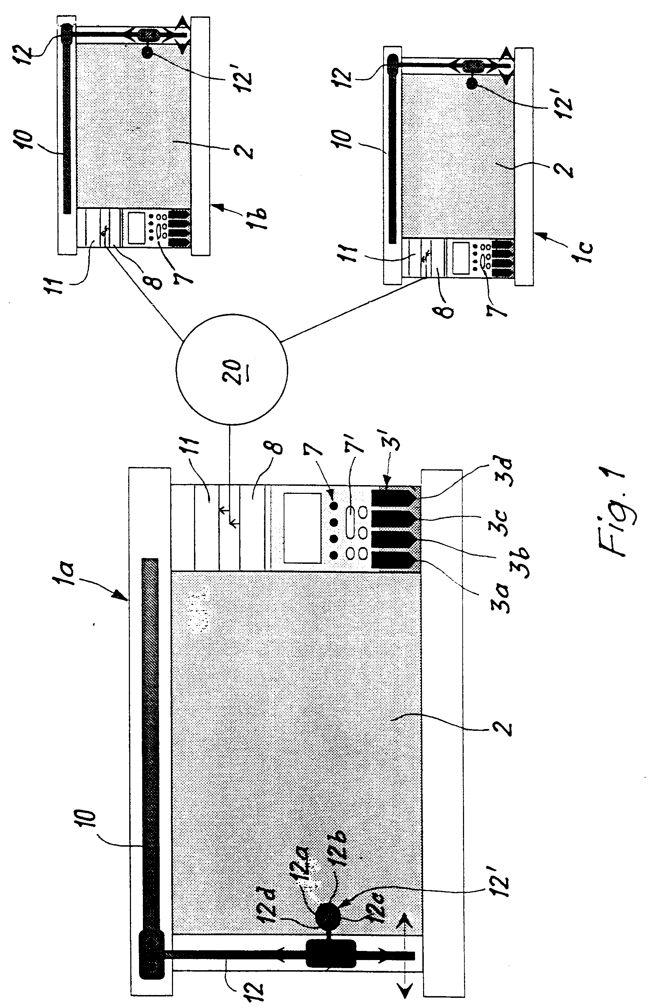

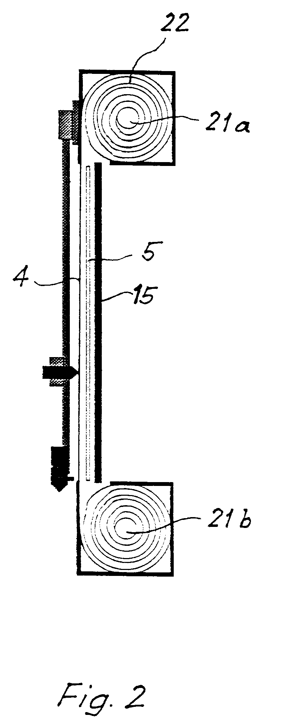

Die Fig. 1 zeigt drei identisch aufgebaute elektronische Präsentationseinrichtungen 1a-1c, die über ein an sich bekanntes Datenübertragungsnetzwerk 20 miteinander verbunden sind. Jede Präsentationseinrichtung 1a-1c weist eine Darstellungsfläche 2 auf, auf der mittels verschiedenfarbiger Schreibstifte 3a-3d eine graphische Darstellung auf eine als Schreibmedium dienende Papierbahn 4 (siehe Fig. 2) aufbringbar ist. Wie aus Fig. 2 ersichtlich, ist hinter der über Rollen 21a, 21b bewegbaren Papierbahn 4 eine durch eine Rückwand 15 abgeschirmte Magnetmatrix 5 angeordnet. Die Magnetmatrix 5 dient zur Abtastung der Bewegung der Schreibstifte 3a-3d auf der Darstellungsfläche 2.

Bei der hier beschriebenen Präsentationseinrichtung 1a-1c ist vorgesehen, daß die Erfassung der Position eines der Schreibstifte 3a-3d auf der Darstellungsfläche 2 induktiv erfolgt: Jeder der Schreibstifte 3a-3d weist einen in den Figuren nicht dargestellten Magnet auf. Die durch die Schreibbewegung auf der Darstellungsfläche 2 hervorgerufene Positionsveränderung der Schreibstifte 3a-3d resultiert in einer lokalen Änderung des die Magnetmatrix 5 durchsetzenden magnetischen Flußes. Hierdurch wird eine von der momentanen Position des Schreibstiftes 3a-3d abhängige Spannung induziert, welche an in den Figuren nicht dargestellten Ausgängen der Magnetmatrix 5 abgreifbar ist.

Um die verschiedenfarbigen Schreibstifte 3a-3d hinsichtlich ihrer Farbe unterscheiden zu können, ist außerdem vorgesehen, daß sich die Magnete der Schreibstifte 3a-3d in ihrer Feldstärke unterscheiden. Die Magnetmatrix 5 wird also bei unterschiedlichen Schreibstiften 3a-3d mit unterschiedlichen magnetischen Feldstärken beaufschlagt, wodurch eine Identifikation des aktuell zum Schreiben oder Zeichnen verwendeten Schreibstiftes 3a-3d möglich ist.

Die eben beschriebene Art und Weise der Abtastung der Schreibbewegung der Schreibstifte 3a-3d mittels der Magnetmatrix 5 und der in den Schreibstiften 3a-3d enthaltenen Magnete stellt nicht die einzige Möglichkeit zur Erkennung der Position der Schreibstifte 3a-3d auf der Darstellungsfläche 2 dar. So ist es auch möglich, diese Positionserkennung über deren mechanische Einwirkung auf eine Widerstandsfolie durchzuführen. Die Identifikation des aktuell verwendeten Schreibstiftes 3a-3d wird dann derart vorgenommen, daß ein die Schreibstifte 3a-3d aufnehmendes Reservoir 3' der Präsentationseinrichtung 1a-1c elektrische Kontakte aufweist, welche bei einer Entnahme eines bestimmten Schreibstiftes 3a-3d ein definiertes Identifikationssignal auslösen, das den aktuell entnommenen Schreibstift 3a-3d charakterisiert.

Es ist aber auch möglich, die Identifikation der Schreibstifte 3a-3d über eine manuelle Eingabe einer den jeweiligen Schreibstifte 3a-3d charakterisierenden Kennung mittels einer Tastatur 7' einer Bedieneinheit 7 der Präsentationseinrichtung 1a-1c durchzuführen, welche dann das zum jeweils verwendeten Schreibstift 3a-3d korrelierte Identifikationssignal erzeugt.

Desweiteren ist noch eine Reihe weiterer Möglichkeiten denkbar, durch die Position und ggf. die Identifikation eines der Schreibstifte 3a-3d auf der Darstellungsfläche 2 registrierbar ist. Wesentlich ist in bezug auf die Abtastung der Schreibbewegung nur, daß hierzu eine Abtasteinrichtung eingesetzt wird, welche die aktuelle Schreibbewegung eines der Schreibstifte 3a-3d oder eines ähnlichen Schreibgerätes auf der Darstellungsfläche 2 registriert und in ein Positionsignal umsetzt. Durch die simultan zur Schreibbewegung erfolgende Erfassung derselben wird in vorteilhafter Art und Weise eine drastische Steigerung der Funktionalität erreicht, da es bei der beschriebenen Präsentationseinrichtung 1a-1c nun nicht mehr erforderlich ist, zum Auslesen der auf der Darstellungsfläche 2 enthaltenden Graphik diese aus dem Sichtbereich der vor der Präsentationseinrichtung 1a-1c sitzenden Personen zu entfernen.

Das von der als Abtasteinrichtung fungierenden Magnetmatrix 5 erzeugte elektronische Positionssignal und ggf. das Identifikationssignal eines jeden Schreibstiftes 3a-3d wird zu einer Auswerte-/Codiereinheit 8 der Präsentationseinrichtung 1a-1c geleitet. In der Auswerte-/Codiereinheit 8 wird das Positionssignal und das Identifikationssignal in bekannter Art und Weise verarbeitet und mittels eines einfachen Protokolls codiert, um ein im Ubertragungsnetzwerk 20 ausbreitungsfähiges Übertragungssignal zu erzeugen. Dieses in codierter Form die auf der Darstellungsfläche 2 der Präsentationseinrichtung 1a enthaltene graphische Information repräsentierende Übertragungssignal wird über das Übertragungsnetzwerk 20 zu den Präsentationseinrichtungen 1b und 1c geleitet.

Jede Präsentationseinrichtung 1a-1c weist eine Wiedergabeeinrichtung 10 auf, welche zur Wiedergabe einer Graphik dient, die von einer externen Quelle in ein von der Wiedergabeeinrichtung 10 verarbeitbares Übertragungssignal umgesetzt wurde. Bei der hier beschriebenen Anordnung stellt diese das Übertragungssignal liefernde externe Quelle die erste Präsentationseinrichtung 1a dar. Eine Decodiereinheit 11 der Wiedergabeeinrichtung 10 der zweiten und/oder dritten Präsentationseinrichtung 1b und/oder 1c wandelt das codierte Übertragungssignal in entsprechende Steuersignale für eine als Graphikeinrichtung fungierende Ploteinrichtung 12 um. Aus dem Übertragungssignal wird von der Decodiereinheit 11 ein erstes Steuersignal abgeleitet, welches die Bewegung eines Plotkopfes 12' auf der Darstellungsfläche 2 der Präsentationseinrichtungen 1b, 1c in einer X- und einer Y-Richtung sowie das Aufsetzen oder Abheben von Plotstiften 12a-12d auf die Papierbahn 4, bestimmt. Das erste Steuersignal repräsentiert also den Verlauf der vom Plotstift 12a-12b wiederzugebende Linie. Ein aus dem Übertragungssignal abgeleitetes zweites Steuersignal dient zur Auswahl eines bestimmten Plotstiftes aus den vier im Plotkopf 12' enthaltenen Plotstiften 12a-12d. Die auf der Darstellungsfläche 2 der Präsentationseinrichtung 1a enthaltene graphische Information wird dann auf den Darstellungsflächen 2 der Präsentationseinrichtungen 1b und 1c wiedergegeben.

Durch die beschriebene Anordnung ist es also in vorteilhafter Art und Weise möglich, eine auf der Darstellungsfläche 2 der ersten Präsentationseinrichtung 1a enthaltene graphische Darstellung über das Übertragungsnetzwerk 20 zur zweiten und/oder zur dritten Präsentationseinrichtung 1b und/oder 1c zu übertragen und auf deren Darstellungsflächen 2 wiederzugeben.

In entsprechender Art und Weise ist es ebenso möglich, die auf der Darstellungsfläche 2 der zweiten oder der dritten Präsentationseinrichtung 1b oder 1c enthaltene graphische Information auf der Darstellungsfläche 2 der ersten Präsentationseinrichtung 1a wiederzugeben.

Durch die in Fig. 1 gezeigte Anordnung ist also in besonders einfacher Art und Weise eine simultane Darstellung einer auf der Darstellungsfläche 2 der ersten Präsentationseinrichtung 1a enthaltenen graphischen Darstellung auf den Darstellungsflächen 2 der Präsentationseinrichtungen 1b und 1c möglich. Außerdem ist hierbei von Vorteil, daß die auf der Darstellungsfläche 2 der ersten bzw. zweiten bzw. dritten Präsentationseinrichtung 1a bzw. 1b bzw. 1c enthaltene Graphik interaktiv von den Benutzern der jeweils anderen Präsentationsflächen 1b, 1c bzw. 1a, 1b ergänzt werden kann. Hierbei ist vorteilhafterweise vorgesehen, daß jeweils nur die "Ergänzung" der graphischen Darstellung über das Übertragungsnetzwerk 20 übertragen wird. Hierdurch wird die Menge der zu übertragenden Daten drastisch reduziert, so daß es möglich ist, zur Übertragung der Graphikinformation auf ein schmalbandiges Übertragungsmedium, wie z.B. auf eine herkömmliche Telefonleitung, zurückzugreifen. Hierdurch wird der Einsatzbereich der beschriebenen Präsentationseinrichtung 1a-1c beträchtlich erweitert, da ein herkömmlicher Telefonanschluß ausreicht, um eine ein interaktives Arbeiten ermöglichende Konferenzschaltung zwischen den drei Präsentationseinrichtungen 1a-1c aufbauen zu können.

Die in Fig. 1 dargestellten, identisch aufgebauten Präsentationseinrichtungen 1a-1c sind nicht nur für die eben beschriebene Konferenzschaltung mit einer simultanen Graphikdarstellung an verschiedenen Orten und interaktiven Bildergänzung von verschiedenen Orten aus einsetzbar. So ist in vorteilhafter Art und Weise auch möglich, eine Präsentationseinrichtung 1a in Verbindung mit einem externen Eingabegerät zur Integration graphischen Informationen in die Darstellungsfläche 2 zu verwenden, welche auf anderen externen Dokumenten als den Darstellungsflächen 2 der anderen elektronischen Präsentationseinrichtungen 1b und 1c enthalten sind. Als externes Eingabegerät kann z.B. ein Scanner verwendet werden, der eine entsprechende Vorlage in ein Übertragungssignal umwandelt, das dann über die Decodiereinheit 11 der Ploteinrichtung 12 der an den Scanner angeschlossenen Präsentationseinrichtung 1a-1c zugeführt wird. Außerdem ist es beispielsweise möglich, als externes Eingabegerät ein PC-Terminal zu verwenden.

In der in Fig. 1 und 2 dargestellten Ausführungform einer elektronischen Präsentationseinrichtung 1a-1c wurde als Schreibmedium eine Papierbahn 4 verwendet, welche über Rollen 21a und 21b vor- und zurückbewegbar war. Die eine Vielzahl von graphischen Darstellungen aufnehmende Papierbahn 4 wird bei dem in Fig. 1 und Fig. 2 gezeigten Ausführungsbeispiel somit gleichzeitig als ein Speicher 22 für die auf der Darstellungsfläche 2 der Präsentationseinrichtung 1a-1c dargestellten Graphiken verwendet.

Alternativ oder in Ergänzung hierzu ist es auch möglich, die auf der Darstellungsfläche 2 enthaltene graphische Information in einem elektronischen Speicher abzuspeichern, indem die von der Magnetmatrix 5 gelieferten Signale in diesem in den Figuren nicht gezeigten elektronischen Speicher aufgezeichnet werden. Die in dem elektronischen Speicher codiert enthaltene graphische Information kann dann zu einem späteren Zeitpunkt wieder ausgelesen werden und über die Wiedergabeeinrichtung 10 mittels der Ploteinrichtung 12 auf der Darstellungsfläche 2 zur Darstellung gebacht werden.

Abschließend ist noch anzuführen, daß die beschriebene Ausbildung der Darstellungsfläche 2 mit einer als Schreibmedium dienenden Papierbahn 4 nicht die einzig denkbare Möglichkeit darstellt. Vielmehr ist es auch möglich, daß die Darstellungsfläche 2 aus mindestens einer Flüssigkristallanzeige besteht, die über eine geeignete Vorrichtung angesteuert wird. Desweiteren ist es denkbar, daß eine auf Magnetfelder reagierende Darstellungsfläche 2 verwendet wird.

## Patentansprüche

1. Elektronische Präsentationseinrichtung, die eine Darstellungsfläche (2) sowie eine Ausleseeinheit aufweist, durch die auf der Darstellungsfläche (2) graphisch dargestellte Informationen erfaßbar und in elektrische Signale umsetzbar sind, **dadurch gekennzeichnet**, daß die elektronische Präsentationseinrichtung (1a;1b;1c) eine Wiedergabeeinrichtung (10) aufweist, der ein Signal zugeführt ist, welches in codierter Form eine auf der Darstellungsfläche (2) der elektronischen Präsentationseinrichtung (1a;1b;1c) wiederzugebende graphische Information enthält, daß die Wiedergabeeinrichtung (10) eine Decodiereinheit (11) aufweist, die das die graphische Information repräsentierende Signal in Steuersignale umwandelt, daß diese Steuersignale einer Graphikeinheit (12) der Wiedergabeeinrichtung (10) zugeführt sind.

2. Elektronische Präsentationseinrichtung nach Anspruch 1, dadurch gekennzeichnet, daß als Graphikeinheit eine Ploteinrichtung (12), eine Flüssigkristall-Anzeigeneinrichtung oder eine auf Magnetfelder reagierende Darstellungsfläche (2) eingesetzt ist.

3. Elektronische Präsentationseinrichtung nach Anspruch 1, dadurch gekennzeichnet, daß die Decodiereinheit (11) der Wiedergabeeinrichtung (10) aus dem die graphische Information enthaltenden Signal ein den Verlauf der von der Graphikeinheit (12) wiederzugebenden Linien repräsentierendes erstes Steuersignal erzeugt.

4. Elektronische Präsentationseinrichtung nach Anspruch 1, dadurch gekennzeichnet, daß die Decodiereinheit (11) der Wiedergabeeinrichtung (10) aus dem die graphische Information enthaltenden Signal ein die Farbe der von der Graphikeinheit (12) wiederzugebenen Linien repräsentierendes zweites Steuersignal erzeugt.

5. Elektronische Präsentationseinrichtung nach Anspruch 1, dadurch gekennzeichnet, daß die Ausleseeinheit (5,8) der elektronischen Präsentationseinrichtung (1a;1b;1c) eine hinter der Darstellungsfläche (2) angeordnete Abtastfläche (5) aufweist, durch die eine Bewegung eines Schreibgeräts (3a-3d) auf der Darstellungsfläche (2) registrierbar ist, daß die Abtastfläche (5) ein die momentane Position des Schreibgeräts (3a-3d) auf der Darstellungsfläche (2) charakterisierendes Positionssignal erzeugt, und daß das Positionssignal einer Auswerte-/Codiereinheit (8) der Ausleseeinheit (5,8) zugeführt ist, die aus dem Positionssignal ein die zu übertragende graphische Information repräsentierendes Signal erzeugt.

6. Elektronische Präsentationseinrichtung nach Anspruch 1, dadurch gekennzeichnet, daß ein elektronischer oder ein mechanischer Speicher (22) zur Speicherung der auf der Darstellungsfläche (2) enthaltenen Graphik eingesetzt ist.

7. Elektronische Präsentationseinrichtung nach Anspruch 6, dadurch gekennzeichnet, daß eine im elektronischen Speicher gespeicherte Graphik durch die Wiedergabeeinrichtung (10) reproduzierbar ist.

8. Elektronische Präsentationseinrichtung, die eine Darstellungsfläche (2) sowie eine Ausleseeinheit aufweist, durch die auf der Darstellungsfläche (2) graphisch dargestellte Informationen erfaßbar und in elektrische Signale umsetzbar sind, dadurch gekennzeichnet, daß die Ausleseeinheit (5,8) der elektronischen Präsentationseinrichtung (1a;1b;1c) eine hinter der Darstellungsfläche (2) angeordnete Abtastfläche (5) aufweist, durch die eine Bewegung eines Schreibgeräts (3a-3d) auf der Darstellungsfläche (2) registrierbar ist, daß die Abtastfläche (5) ein die momentane Position des Schreibgeräts (3a-3d) auf der Darstellungsfläche (2) charakterisierendes Positionssignal erzeugt, und daß das Positionssignal einer Auswerte-/Codiereinheit (8) der Ausleseeinheit (5,8) zugeführt ist, die aus dem Positionssignal ein die zu übertragende graphische Information repräsentierendes Signal erzeugt.

9. Elektronische Präsentationseinrichtung nach Anspruch 5 oder 8 dadurch gekennzeichnet, daß als Abtastfläche eine Magnetmatrix (5) oder eine Widerstandsfolie eingesetzt ist.

10. Elektronische Präsentationseinrichtung nach Anspruch 9 dadurch gekennzeichnet, daß jedes Schreibgerät (3a-3d) einen mit der Magnetmatrix (5) zusammenwirkenden Magnet aufweist, und daß das die Position des Schreibgeräts (3a-3d) auf der Darstellungsfläche (2) charakterisierende Positionssignal durch eine Erfassung einer lokalen Änderung des die Magnetmatrix (5) durchsetzenden magnetischen Flusses erzeugt ist.

11. Elektronische Präsentationseinrichtung nach Anspruch 5 oder 8 dadurch gekennzeichnet, daß zur Kennzeichnung der Farbe des Schreibgerätes (3a-3d) eine magnetische Codierung eingesetzt ist.
